# EUROPEAN PATENT APPLICATION

(11) **EP 4 806 571 A1**
(43) Date of publication of application: **16.09.2026**
(21) Application number: 24875634.8
(22) Date of filing: 23.08.2024
(51) Int. Cl.: B23D 19/06, B23D 35/00

(54) **SLITTING CUTTER SET AND ELECTRODE SHEET SLITTING DEVICE**

(30) Priority: 10.11.2023 CN 202323049595 U
(71) Applicant: Wuxi Lead Intelligent Equipment Co., Ltd., Wuxi, Jiangsu 214028 (CN)
(72) Inventor: LIANG, Hao, Wuxi, Jiangsu 214028 (CN); TU, Xinping, Wuxi, Jiangsu 214028 (CN)
(74) Representative: Rau, Schneck & Hübner Patentanwälte Rechtsanwälte PartGmbB
(86) International application number: PCT/CN2024/114341
(87) International publication number: WO 2025/097948

(57) **Abstract**

The present disclosure provides a slitting cutter group and a pole piece slitting device. The slitting cutter group comprises: a first cutter assembly comprising a first rotating shaft, two first cutters, a first spacer bushing, and an elastic member, wherein the two first cutters are sleeved over the first rotating shaft at an interval, the first spacer bushing is sleeved over the first rotating shaft and located between the two first cutters, and the elastic member is disposed on the periphery of the first rotating shaft, is located between the two first cutters, and abuts against the two first cutters; a second cutter assembly comprising a second rotating shaft and two second cutters, wherein the second rotating shaft is parallel to the first rotating shaft, and the two second cutters are fixedly sleeved over the second rotating shaft at an interval, and are respectively provided in one-to-one correspondence with the first cutters in an axial direction of the second rotating shaft, so that the two second cutters are capable of respectively cooperating with the two first cutters for slitting. The present disclosure can reduce the space occupied by the device, reduces costs, and improves the stability of the slitting quality of the pole piece. (FIG. 1)

## Description

### CROSS-REFERENCE TO RELATED APPLICATIONS

The present disclosure claims priority to a Chinese patent application No. 202323049595.3 filed with the CNIPA on November 10, 2023 and entitled "SLITTING CUTTER GROUP AND POLE PIECE SLITTING DEVICE", which is hereby incorporated by reference in its entirety.

### TECHNICAL FIELD

The present disclosure relates to the technical field of slitting a pole piece, and particularly to a slitting cutter group and a pole piece slitting device.

### BACKGROUND

In a process of slitting a pole piece into narrow strips during manufacturing a battery, it is necessary to use a slitting cutter group to slit narrow strips from the middle of a wide-width pole piece. Limited by the structure of the existing slitting cutter group, if the existing slitting cutter group is used to slit the narrow strips from the middle of the wide-width pole piece, it is necessary to set up two slitting cutter groups so as to perform rotary cutting twice on the middle of the wide-width pole piece in sequence by means of the two slitting cutter groups, thereby slitting the narrow strips from the middle of the wide-width pole piece.

However, using two slitting cutter groups not only increases the space occupied by the device and the manufacturing cost, but also increases the instability of the slitting quality of the pole piece when performing rotary cutting sequentially through the two slitting cutter groups on the pole piece, since the position of the pole piece is prone to offset.

### SUMMARY

In view of the above-mentioned deficiencies in the related art, the present disclosure provides a slitting cutter group and a pole piece slitting device, so as to solve the problems that the slitting cutter group in the related art leads to increased space occupied by the device, increased cost, and instability of the slitting quality of the pole piece.

In order to solve the above problem, in a first aspect, the present disclosure provides a slitting cutter group, which comprises:
a first cutter assembly comprising a first rotating shaft, two first cutters, a first spacer bushing, and an elastic member, wherein the two first cutters are sleeved over the first rotating shaft at an interval, the first spacer bushing is sleeved over the first rotating shaft and located between the two first cutters, and the elastic member is disposed on the periphery of the first rotating shaft, is located between the two first cutters, and abuts against the two first cutters;
a second cutter assembly comprising a second rotating shaft and two second cutters, wherein the second rotating shaft is parallel to the first rotating shaft, and the two second cutters are fixedly sleeved over the second rotating shaft at an interval, and are respectively provided in one-to-one correspondence with the first cutters in an axial direction of the second rotating shaft, so that the two second cutters are capable of respectively cooperating with the two first cutters for slitting.

In a possible implementation of the first aspect, the elastic member is an elastic ring, which is sleeved over the periphery of the first rotating shaft.

In a possible implementation of the first aspect, there is provided one elastic ring which is sleeved over the first spacer bushing.

In a possible implementation of the first aspect, there are provided two elastic rings which are sleeved over the first rotating shaft, and one of the elastic rings is abutted between the first spacer bushing and each of the two first cutters.

In a possible implementation of the first aspect, the first spacer bushing comprises a large diameter section and two small diameter sections, the two small diameter sections are located on both sides of the large diameter section along an axial direction of the first rotating shaft, the two elastic rings are respectively sleeved over the two small diameter sections, and one of the elastic rings is abutted between the large diameter section and each of the two first cutters.

In a possible implementation of the first aspect, projections of the two first cutters onto the second rotating shaft are located between the two second cutters, and the elastic member is configured for applying a force to a respective first cutter in a direction away from the first spacer bushing along the axial direction of the first rotating shaft, so that each of the first cutters is pressed against a respective second cutter.

In a possible implementation of the first aspect, the second cutter assembly further comprises:
a second spacer bushing sleeved over the second rotating shaft and located between the two second cutters;
second end bushings sleeved over the second rotating shaft and located respectively on two sides of the two second cutters opposite to the second spacer bushing, wherein the second end bushings and the second spacer bushing are configured for together clamping and fixing the second cutters.

In a possible implementation of the first aspect, projections of the two first cutters onto the second rotating shaft are located between the two second cutters, and an outer diameter of the second cutter is equal to that of the second end bushings and greater than that of the second spacer bushing.

In a possible implementation of the first aspect, the second cutter is a flat cutter.

In a possible implementation of the first aspect, the first cutter assembly further comprises:
first end bushings sleeved over the first rotating shaft and located respectively on two sides of the two first cutters opposite to the first spacer bushing, wherein outer diameters of the first end bushings and the first spacer bushing are the same and are less than that of the first cutters.

In a possible implementation of the first aspect, the first cutters are tapered cutters, each of which is provided with a beveled section sloping inwardly from the radial outermost part of the first cutter toward a radial inner part of the first cutter along the axial direction of the first rotating shaft.

In a second aspect, the present disclosure provides a pole piece slitting device, which comprises:
a mounting frame; and
a slitting cutter group of any one of the first aspect, mounted on the mounting frame.

Compared with the prior art, the present disclosure has at least the following beneficial effects:
In the present disclosure, since the elastic member is provided between the two first cutters, and since the elastic member abuts against the two first cutters, and the first cutters can cooperate with the corresponding second cutters for slitting, the first cutter contacts with the second cutter through the elastic action of the elastic member, which is conducive to avoiding damage caused by the rigid contact between the first cutter and the second cutter in the related art.

Furthermore, since the first rotating shaft is sleeved with two first cutters spaced apart along its axial direction, and the second rotating shaft is sleeved with two second cutters spaced apart along its axial direction, and since each second cutter is arranged in one-to-one correspondence with each first cutter in the axial direction of the second rotating shaft so as to enable two second cutters to respectively cooperate with two first cutters for slitting, therefore, one slitting cutter group in the present disclosure can slit narrow strips from the middle of the pole piece in one pass through the cooperation of two first cutters and two second cutters. Compared with the related art, it is not necessary to set up two slitting cutter groups to perform sequential rotary cutting on the pole piece, which not only reduces the slitting time of the slitting cutter group on the pole piece and thus is conducive to improving the work efficiency, but also reduces the size and the occupied space of the battery production device through one slitting cutter group and reduces the production cost. Meanwhile, by performing slitting on the pole piece through one slitting cutter group, the pole piece does not need to enter another slitting cutter group, which helps avoiding the positional offset of the pole piece and thus is conducive to improving the stability of the slitting quality of the pole piece.

### BRIEF DESCRIPTION OF THE DRAWINGS

In order to more clearly illustrate technical solution of embodiments of the present application, accompanying drawings that need to be used in description of the embodiments will be briefly introduced as follows. Obviously, drawings in following description are only the embodiments of the present disclosure. For those skilled in the art, other drawings can also be obtained according to the disclosed drawings without creative efforts.
FIG 1 is a structural schematic diagram of a slitting cutter group provided by embodiments of the present disclosure;
FIG. 2 is a structural schematic diagram of a first cutter assembly provided by embodiments of the present disclosure;
FIG. 3 is a structural schematic diagram of a second cutter assembly provided by embodiments of the present disclosure;
FIG. 4 is a structural schematic diagram of a first spacer bushing provided by embodiments of the present disclosure;
FIG. 5 is a structural schematic diagram of a second cutter provided by embodiments of the present disclosure;
FIG. 6 is a structural schematic diagram of a first cutter provided by embodiments of the present disclosure;
FIG. 7 is a structural schematic diagram of a pole piece slitting device provided by embodiments of the present disclosure.

### Description of reference signs:

1-first rotating shaft ;
2-second rotating shaft ;
3-first cutter; 31-beveled section;
4-second cutter;
5-first spacer bushing; 51-large diameter section; 52-small diameter section;
6-elastic member;
7-pole piece;
8-second spacer bushing;
9-second end bushing;
10-first end bushing;
100-first cutter assembly;
200-second cutter assembly;
1000-slitting cutter group.

### DETAILED DESCRIPTION

The following description will clearly and completely describe the technical solutions in the embodiments of the present disclosure in conjunction with the drawings in the embodiments of the present disclosure. Obviously, the described embodiments are only part of the embodiments of the present disclosure, not all of them. Based on the embodiments in the present disclosure, all other embodiments obtained by those skilled in the art without creative labor fall within the scope of protection of the present disclosure.

In the present disclosure, an orientation or positional relationship indicated by terms "up", "down", "left", "right", "front", "back", "top", "bottom", "inner", "outer", "vertical", "horizontal", "transverse", "longitudinal", etc., is based on the orientation or positional relationship shown in the accompanying drawings. These terms are mainly intended to better describe the present disclosure and its embodiments, rather than to limit that the indicated devices, components, or parts must have specific orientations or be constructed and operated in specific orientations.

Moreover, some of these terms may also be used to indicate other meanings besides indicating orientation or positional relationships. For example, the term "up" may also indicate a certain attachment relationship or connection relationship in certain cases. Those skilled in the art may understand the specific meanings of these terms in the present disclosure according to specific situations.

In addition, terms "installed", "disposed", "provided with", "connected", and "communicated" should be interpreted in a broad sense. For example, it can be a fixed connection, a detachable connection, or an integrated construction; it can be a mechanical connection or an electrical connection; it can be directly connected, or indirectly connected through an intermediate medium, and it can be an internal communication between two devices, elements or parts. For those of ordinary skill in the art, specific meanings of the above terms in the present disclosure can be understood according to specific situations.

In addition, terms such as "first", "second", etc., are mainly used to distinguish different devices, elements, or parts (which may be the same or different in specific types and structures), and do not imply or suggest relative importance and quantity of the indicated devices, elements, or parts. Unless otherwise stated, the term "plurality" means two or more.

As described in the background of the present disclosure,
In a process of slitting a pole piece into narrow strips during battery manufacturing, it is necessary to use a slitting cutter group to slit narrow strips from the middle of a wide-width pole piece. Limited by the structure of the existing slitting cutter group, if the existing slitting cutter group is used to slit the narrow strips from the middle of the wide-width pole piece, it is necessary to set up two slitting cutter groups so as to perform rotary cutting twice sequentially on the middle of the wide-width pole piece using the two slitting cutter groups, thereby slitting the narrow strips from the middle of the wide-width pole piece.

However, using two slitting cutter groups not only increases the space occupied by the device and the manufacturing cost, at the same time, but also increases the instability of the slitting quality of the pole piece when performing rotary cutting sequentially through the two slitting cutter groups on the pole piece, since the position of the pole piece is prone to offset.

### Embodiment One

In view of the above-mentioned problems, the present disclosure provides a slitting cutter group and a pole piece slitting device to solve the problems that the slitting cutter group in the related art leads to increased size of the device, increased cost, and instability of the slitting quality of the pole piece.

The technical solution of the present disclosure will be further described below in combination with specific embodiments and drawings.

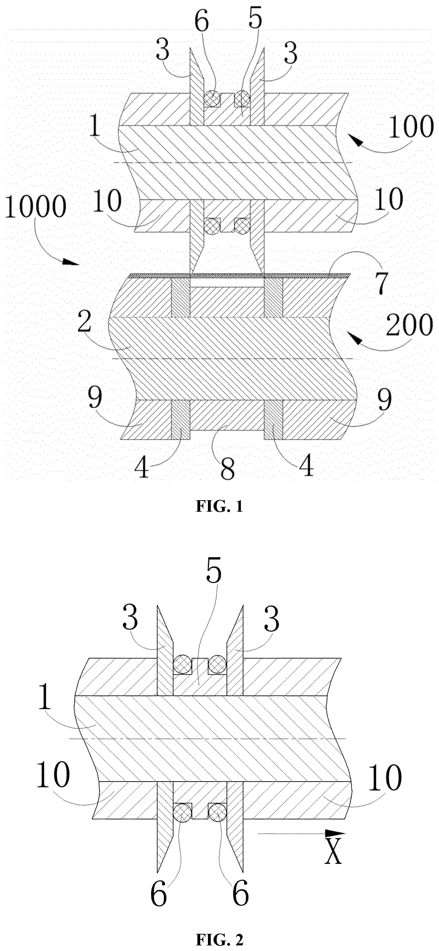

As shown in FIGS. 1, 2, and 3, the slitting cutter group 1000 comprises a first cutter assembly 100 and a second cutter assembly 200, wherein the first cutter assembly 100 comprises a first rotating shaft 1, two first cutters 3, a first spacer bushing 5, and an elastic member 6, wherein the two first cutters 3 are sleeved over the first rotating shaft 1 at an interval, the first spacer bushing 5 is sleeved over the first rotating shaft 1 and located between the two first cutters 3, and the elastic member 6 is disposed on the periphery of the first rotating shaft 1, is located between the two first cutters 3, and abuts against the two first cutters 3.

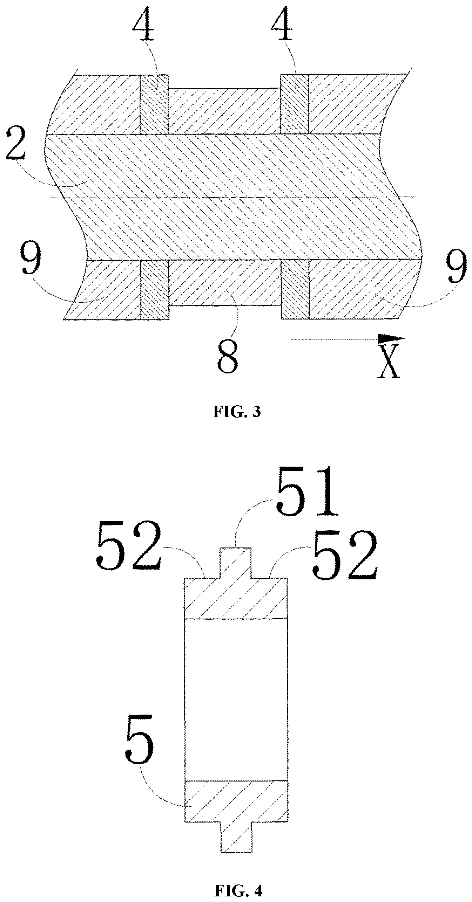

The second cutter assembly 200 comprises a second rotating shaft 2 and two second cutters 4, wherein the second rotating shaft 2 is parallel to the first rotating shaft 1, and the two second cutters 4 are fixedly sleeved over the second rotating shaft 2 at an interval, and are respectively provided in one-to-one correspondence with the first cutters 3 in an axial direction of the second rotating shaft 2 (X-axis direction in FIG. 3), so that the two second cutters 4 are capable of respectively cooperating with the two first cutters 3 for slitting.

In the present disclosure, since the elastic member 6 is provided between the two first cutters 3, and since the elastic member 6 abuts against the two first cutters 3 while the first cutters 3 in turn cooperate with the corresponding second cutters 4 for slitting, the first cutter 3 contacts the second cutter 4 through the elastic action of the elastic member 6, which is advantageous in avoiding the damage caused by the rigid contact of the first cutter 3 and the second cutter 4 in the related art.

Furthermore, since the first rotating shaft 1 is sleeved with two first cutters 3 spaced apart along its axial direction, and the second rotating shaft 2 is sleeved with two second cutters 4 spaced apart along its axial direction, and since each second cutter 4 is arranged in one-to-one correspondence with each first cutter 3 in the axial direction of the second rotating shaft 2 so as to enable two second cutters 4 to respectively cooperate with two first cutters 3 for slitting, therefore, one slitting cutter group 1000 in the present disclosure can slit narrow strips from the middle of the pole piece 7 in one pass through the cooperation of two first cutters 3 and two second cutters 4. Compared with the related art, it is not necessary to set up two slitting cutter groups 1000 to perform sequential rotary cutting on the pole piece 7, which not only reduces the slitting time of the slitting cutter group 1000 on the pole piece 7 and thus is conducive to improving the work efficiency, but also reduces the size and the occupied space of the battery production device through one slitting cutter group 1000 and reduces the production cost. Meanwhile, by performing slitting on the pole piece 7 through one slitting cutter group 1000, the pole piece 7 does not need to enter another slitting cutter group 1000, which helps avoiding the positional offset of the pole piece 7 and thus is conducive to improving the stability of the slitting quality of the pole piece 7.

Regarding the arrangement direction of the first rotating shaft 1 and the second rotating shaft 2, in the present embodiment, the arrangement direction of the first rotating shaft 1 and the second rotating shaft 2 is an up-down direction, and the first rotating shaft 1 may be located directly above or directly below the second rotating shaft 2. Therefore, in the up-down direction, the pole piece 7 may be supported on the second cutter 4 or the first cutter 3 more stably due to gravity, which is conducive to further avoiding the positional offset of the pole piece 7 and further improving the stability of the slitting quality of the pole piece.

In other embodiments, the arrangement direction of the first rotating shaft 1 and the second rotating shaft 2 may be an oblique up-down direction, a front-back direction or a left-right direction in a horizontal direction. The arrangement directions of the first rotating shaft 1 and the second rotating shaft 2 are relatively flexible, and may be specifically determined according to actual requirements.

As for the arrangement of the elastic member 6, in an embodiment, the elastic member 6 is an elastic ring which is sleeved over the periphery of the first rotating shaft 1. In this way, it is possible to increase the stability of the elastic member 6 mounted on the periphery of the first rotating shaft 1, thereby enabling the elastic member 6 to more stably act on the two first cutters 3.

In the present embodiment, the elastic ring may be a rubber ring, a spring ring, an elastic foam ring, or the like. The selection of the specific type of the elastic ring is more flexible, and specifically, it may be selected according to the actual specific needs.

In another embodiment, a plurality of elastic members 6 are provided, spaced around the first rotating shaft 1 in the circumferential direction of the first rotating shaft 1. That is, the plurality of elastic members 6 are arranged at intervals around the first rotating shaft 1 on its periphery. In this way, it is possible to enhance the elastic action on the first cutter 3 by means of the plurality of elastic members 6, thereby further avoiding rigid contact between the first cutter 3 and the second cutter 4.

In the present embodiment, the elastic member 6 may be an elastic rubber block, an elastic foam block, a coil spring, or the like. The selection of the specific type of the elastic member 6 is more flexible, and specifically, it may be selected according to the actual specific needs.

Further, for the number of the elastic rings, in one embodiment, there is provided one single elastic ring (not shown), which is sleeved over the first spacer bushing 5.

In this way, the elastic ring may be disposed on the periphery of the first rotating shaft 1 by being sleeved over the first spacer bushing 5, and since the one single elastic ring may simultaneously abut against the two first cutters 3, it is possible to reduce the number of the elastic members 6, which is conducive to reducing the manufacturing cost.

In another embodiment, as shown in FIGS. 1 and 2, there are provided two elastic rings which are both sleeved over the first rotating shaft 1, and one of the elastic rings is abutted between the first spacer bushing 5 and each of the two first cutters 3.

In this way, the two elastic rings may respectively abut against the two first cutters 3, which thus may enhance the abutting effect of the elastic ring against the first cutters 3, in turn enhance the elastic effect of the elastic member 6 against the first cutters 3, and be conducive to avoiding the rigid contact between the first cutters 3 and the second cutters 4.

Further, as shown in FIG. 4, the first spacer bushing 5 comprises a large diameter section 51 and two small diameter sections 52, the two small diameter sections 52 are located on both sides of the large diameter section 51 along an axial direction of the first rotating shaft 1, the two elastic rings are respectively sleeved over the two small diameter sections 52, and one of the elastic rings (as shown in FIGS. 1 and 2) is abutted between the large diameter section 51 and each of the two first cutters 3.

In this way, it is possible to make the small diameter section 52 contact with the first cutter 3 so as to restrict the first cutter 3 in the axial direction of the first rotating shaft 1, such that the spacing between two adjacent first cutters 3 is guaranteed by the axial dimension of the first spacer bushing 5, which is conducive to enhancing the stability of mounting the first cutters 3 on the first rotating shaft 1, and further conducive to enhancing the rotary cutting coordination of the first cutter 3 and the corresponding second cutter 4.

In another embodiment, the first spacer bushing 5 is in a cylindrical shape with a constant diameter. In this case, the elastic ring is disposed between the first cutter 3 and the end face of the first spacer bushing 5 in the axial direction. In this way, it is possible to simplify the structure of the first spacer bushing 5, and to facilitate the processing and manufacturing of the first spacer bushing 5.

Projections of the two first cutters 3 onto the second rotating shaft 2 are located between the two second cutters 4, and the elastic member 6 is configured for applying a force to a respective first cutter 3 in a direction away from the first spacer bushing 5 along the axial direction of the first rotating shaft 1, so that each of the first cutters 3 is pressed closely against a respective second cutter 4.

In this way, it is possible to enable the first cutter 3 to be pressed closely against the respective second cutter 4, to increase the pressing force between the first cutter 3 and the corresponding second cutter 4, to be conducive to enhancing the rotary cutting coordination of the first cutter 3 and the second cutter 4, and to further guarantee the effective rotary cutting of the first cutter 3 and the second cutter 4 on the pole piece 7.

In other embodiments, even if the elastic member 6 applies a force to each first cutter 3, each first cutter 3 does not press closely against the corresponding second cutter 4, and in this case, the first cutter 3 may be separated from the corresponding second cutter 4 by a certain distance, which not only facilitates the mounting of the first cutter 3 and the corresponding second cutter 4, but also, the first cutter 3 and the second cutter 4 separated by a certain distance may also be applied to other application scenarios, or may be applied to slitting other objects different from the pole piece 7.

Further, as shown in FIGS. 1 to 3, the second cutter assembly 200 further includes a second spacer bushing 8 and second end bushings 9. Here, the second spacer bushing 8 is sleeved over the second rotating shaft 2 and located between the two second cutters 4, the second end bushings 9 are sleeved over the second rotating shaft 2 and located respectively on two sides of the two second cutters 4 opposite to the second spacer bushing 8, and the second end bushings 9 and the second spacer bushing 8 are configured for together clamping and fixing the second cutters 4.

In this way, the second cutter 4 may be detachably sleeved over the second rotating shaft 2, which not only facilitates the mounting of the second cutter 4 on the second rotating shaft 2, but also facilitates the replacement of the second cutter 4 when the second cutter is broken. Through the second spacer bushing 8 and the second end bushings 9, it is not only possible to guarantee the clamping and fixing effect of the second cutter 4, but also to simplify the fixing structure of the second cutter 4 on the second rotating shaft 2, facilitating the fixing on the second cutter 4. In addition, the axial dimension of the second spacer bushing 8 also facilitates the control of the spacing between the two second cutters 4.

It should be noted that in the axial direction of the second rotating shaft 2, both sides of the two second end bushings 9 away from the second cutters 4 are respectively provided with a structure for restricting the axis of the second end bushing 9 and fixing the second end bushing 9. For example, the structure may be a nut threadedly assembled to the second rotating shaft 2, or may be a bolt inserted into the second rotating shaft 2. Specific details about these structures are not elaborated upon in the embodiments of the present disclosure.

As for the second spacer bushing 8 and the second end bushing 9, in the present embodiment, the second spacer bushing 8 and the second end bushing 9 are in a cylindrical shape with the same diameter. In this way, it is possible to simplify the structures of the second spacer bushing 8 and the second end bushing 9, and to facilitate the processing and manufacturing of the second spacer bushing 8 and the second end bushing 9.

In other embodiments, the second spacer bushing 8 and the second end bushing 9 may be in the shape of a stepped shaft. In this way, it is possible to enable the second spacer bushing 8 and the second end bushing 9 to meet certain special application scenarios, and to facilitate the use of the second spacer bushing 8 and the second end bushing 9 in the special application scenarios.

In other embodiments, the second cutter 4 is welded to the second rotating shaft 2. In this case, there is no need to provide the second spacer bushing 8 and the second end bushing 9. In this way, it is possible to reduce the number of assembly components on the second rotating shaft 2, and to facilitate the assembly of the components on the second rotating shaft 2.

Further, as shown in FIGS. 1 and 3, projections of the two first cutters 3 onto the second rotating shaft 2 are located between the two second cutters 4, and an outer diameter of the second cutter 4 is equal to that of the second end bushings 9 and greater than that of the second spacer bushing 8.

In this way, it is possible to enable the pole piece 7 to contact with the second cutter 4 and the second end bushing 9 at the same time, increasing the supporting area of the pole piece 7. Consequently, when performing the rotary cutting on the pole piece 7, it is possible to make the pole piece 7 more stable, further improving the stability of the slitting quality of the pole piece 7. In the present embodiment, since the projections of the two first cutters 3 onto the second rotating shaft 2 are located between the two second cutters 4, setting the outer diameter of the second cutters 4 to be greater than the outer diameter of the second spacer bushing 8 creates an avoidance space for the first cutter 3 on the radial outer part of the second spacer bushing 8 and between the two second cutters 4. This helps prevent motion interference between the second spacer bushing 8 and the first cutter 3, ensuring normal rotary cutting of the first cutter 3 and the second cutter 4 on the pole piece 7.

For the second end bushing 9, in other embodiments, its outer diameter may be smaller than that of the second cutter 4. In this way, it is possible to reduce the outer diameter of the second end bushing 9, thereby reducing the material needed for manufacturing the second end bushing 9 and lowering the manufacturing cost.

For the second spacer bushing 8, in other embodiments, when the projections of the two first cutters 3 onto the second rotating shaft 2 are respectively located on the two second cutters 4, the outer diameter of the second spacer bushing 8 may be equal to that of the second cutter 4. In this way, it is possible to enable the pole piece 7 to contact with the second cutter 4 and the second spacer bushing 8, thus to increase the supporting area of the pole piece 7, and further to be conducive to guaranteeing the stability of the position of the pole piece 7.

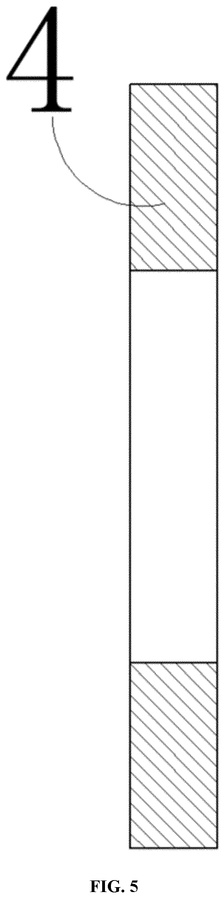

Further, as shown in FIG. 5, the second cutter 4 is a flat cutter.

In this way, it is possible to increase the supporting area of the second cutter 4 to pole piece 7, and further to improve the stability of pole piece 7 when performing the rotary cutting on the pole piece 7.

In another embodiment, the second cutters 4 are tapered cutters. In this way, it is possible to form a sharp structure which is easy to perform the rotary cutting on the pole piece 7, and thus to be conducive to performing the rotary cutting on the pole piece 7.

As shown in FIGS. 1 and 2, the first cutter assembly 100 further comprises first end bushings 10 sleeved over the first rotating shaft 1 and located respectively on two sides of the two first cutters 3 opposite to the first spacer bushing 5, and outer diameters of the first end bushings 10 and the first spacer bushing 5 are the same and are less than that of the first cutters 3.

In this way, by means of the first end bushing 10 and the first spacer bushing 5, it is possible to facilitate the fixing of the first cutter 3, while also to simplify the fixing structure for fixing the first cutter 3, facilitating the processing and manufacturing of the slitting cutter group 1000. By setting the outer diameters of both the first end bushing 10 and the first spacer bushing 5 to be the same, it is possible to guarantee the uniformity of the radial dimension of the first rotating shaft 1, and thus to guarantee the stable rotation of the first rotating shaft 1, thereby enabling the first cutter 3 to perform the rotary cutting on the pole piece 7 more stably. By setting the outer diameters of the first end bushing 10 and the first spacer bushing 5 to be smaller than that of the first cutter 3, it is possible to make the first cutter 3 protrude from the first end bushing 10 and the first spacer bushing 5, to guarantee effective contact of the first cutter 3 with the pole piece 7, and thus to guarantee that the first cutter 3 performs an effective rotary cutting on the pole piece 7.

It should be noted that in the axial direction of the first rotating shaft 1, both sides of the two first end bushings 10 away from the first cutters 3 are respectively provided with a structure for restricting the axis of the first end bushings 10 and fixing the first end bushings 10. For example, the structure may be a nut threadedly assembled to the first rotating shaft 1, or may be a bolt inserted into the first rotating shaft 1. Specific details about these structures are not elaborated upon in the embodiments of the present disclosure.

As for the first end bushing 10, in the present embodiment, as shown in FIGS. 1 and 2, the first end bushing 10 is in a cylindrical shape with a constant diameter. In this way, it is possible to simplify the structure of the first end bushing 10, and to facilitate the processing and manufacturing of the first end bushing 10.

In other embodiments, the first end bushing 10 may be in the shape of a stepped shaft. In this way, it is possible to enable the first end bushing 10 to meet certain special application scenarios, and to facilitate the use of the first end bushing 10 in the special application scenarios.

In other embodiments, the outer diameters of the first end bushing 10 and the first spacer bushing 5 may be different. In this way, it is possible to simplify the dimensional relationship between the first end bushing 10 and the first spacer bushing 5, and to facilitate the processing of them.

In other embodiments, when the projections of the two first cutters 3 onto the second rotating shaft 2 are respectively located on the two second cutters 4, the outer diameters of the first end bushing 10 and the first spacer bushing 5 may be equal to the outer diameter of the first cutter 3. In this way, it is possible to enable the pole piece 7 to contact with the first cutter 3, the first end bushing 10 and the first spacer bushing 5, also to increase the supporting area of the pole piece 7, and further to guarantee the stability of the position of the pole piece 7.

In other embodiments, it is likely that there is no a first end bushing 10, in which case, in the axial direction of the first rotating shaft 1, the two sides of the two first cutters 3 away from the first spacer bushing 5 may be restricted and fixed by providing the first spacer bushing 5 or nuts. In this way, it is possible to simplify the structural arrangement on the first rotating shaft 1, and to facilitate the processing and assembly of the slitting cutter group 1000.

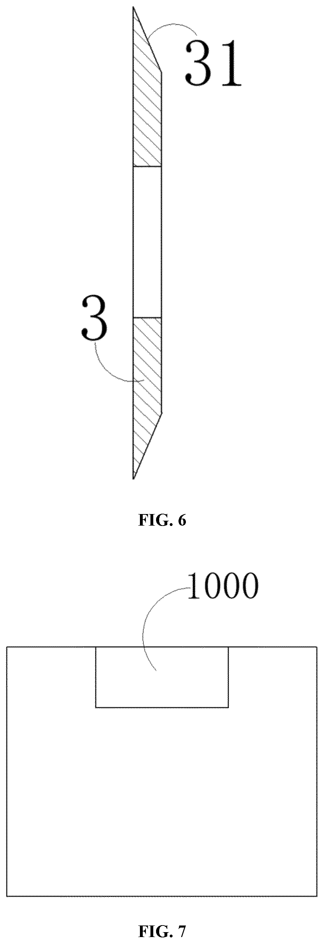

As shown in FIG. 6, the first cutters 3 are tapered cutters, each of which is provided with a beveled section 31 sloping inwardly from the radial outermost part of the first cutter 3 toward a radial inner part of the first cutter 3 along the axial direction of the first rotating shaft 1.

In this way, it is possible to form a shape structure on the first cutter 3 that is easy to perform the rotary cutting on the pole piece 7, thus to be conducive to performing the rotary cutting on the pole piece 7, and also to improve the rotary cutting quality and rotary cutting efficiency of the pole piece 7 at the same time.

Specifically, in the present embodiment, the first cutter 3 is provided with a beveled section 31. In this way, it is not only possible to form a sharp structure on the first cutter 3 which is easy to perform the rotary cutting on the pole piece 7, but also possible to relatively simplify the structure of the first cutter 3, thereby contributing to relatively convenient processing of the first cutter 3.

In other embodiments, the first cutter 3 is provided with two beveled sections 31 arranged symmetrically with respect to a plane perpendicular to the axial direction of the first rotating shaft 1. The joint between the two beveled sections 31 constitutes a blade. In this way, it is not necessary to pay attention to the orientation of the beveled section 31 when mounting the first cutter 3, facilitating the mounting of the first cutter 3.

Further, as shown in FIGS. 1 and 2, the beveled sections 31 on the two first cutters 3 are arranged opposite to each other.

In this way, when the two first cutters 3 perform the rotary cutting on the pole piece 7, the beveled sections 31 on the two first cutters 3 may guide the slit narrow strips, so that the two narrow strips may move toward between the two first cutters 3 in the direction away from the first rotating shaft 1, which may prevent the first cutter 3 from performing a plurality of rotary cuttings on the slit narrow strips, and be conductive to avoiding the occurrence of burrs on the narrow strip, thereby guaranteeing the slitting quality of the pole piece. In addition, by arranging the beveled sections 31 on the two adjacent first cutters 3 facing towards each other, it is also possible to reduce the spacing between the two first cutters 3, and thus to reduce the length of the first rotating shaft in the axial direction, thereby realizing the miniaturization design of the slitting cutter group 1000.

In another embodiment, the beveled sections 31 on two adjacent first cutters 3 are arranged facing away from each other. In this way, at the radial outer part of the first rotating shaft 1 between the two first cutters 3, it is possible to increase the range where the split strip may move, to be conducive to avoiding the strip being stuck between the two first cutters 3, and thus to guarantee the normal rotary cutting on the pole piece 7.

Finally, it should be noted that in addition to the pole piece, the slitting cutter group 1000 in the present disclosure may also slit other sheet materials, such as plastic sheets, which will not be described in detail in the embodiments of the present disclosure.

### Embodiment Two

The present disclosure further provides a pole piece slitting device. As shown in FIG. 7, the pole piece slitting device comprises a mounting frame and a slitting cutter group 1000. The slitting cutter group 1000 is provided on the mounting frame, has the same structure as any one of the slitting cutter group 1000 in the above embodiments, and may bring the same or similar beneficial effects, which is specifically referred to in the description of the above embodiments and will not be repeated in the present embodiments.

In the present disclosure, since the elastic member 6 is provided between the two first cutters 3, and since the elastic member 6 abuts against the two first cutters 3 while the first cutters 3 in turn cooperate with the corresponding second cutters 4 for slitting, the first cutter 3 is in contact with the second cutter 4 through the elastic action of the elastic member 6, which is advantageous in avoiding the damage caused by the rigid contact of the first cutter 3 and the second cutter 4 in the related art.

In addition, since the first rotating shaft 1 is sleeved with two first cutters 3 spaced apart along its axial direction, and the second rotating shaft 2 is sleeved with two second cutters 4 spaced apart along its axial direction, and since each second cutter 4 is arranged in one-to-one correspondence with each first cutter 3 in the axial direction of the second rotating shaft 2 so as to enable two second cutters 4 to respectively cooperate with two first cutters 3 for slitting, therefore, one slitting cutter group 1000 in the present disclosure can slit narrow strips from the middle of the pole piece 7 in one pass through the cooperation of two first cutters 3 and two second cutters 4. Compared with the related art, it is not necessary to set up two slitting cutter groups 1000 to perform sequential rotary cutting on the pole piece 7, which not only reduces the slitting time of the slitting cutter group 1000 on the pole piece 7 and thus is conducive to improving the work efficiency, but also reduces the size and the occupied space of the battery production device through one slitting cutter group 1000 and reduces the production cost. Meanwhile, by performing slitting on the pole piece 7 through one slitting cutter group 1000, the pole piece 7 does not need to enter another slitting cutter group 1000, which helps avoiding the positional offset of the pole piece 7 and thus is conducive to improving the stability of the slitting quality of the pole piece 7.

Finally, it should be noted that the above embodiments are only used to illustrate the technical solutions of the present disclosure, not to limit them; although the present disclosure has been described in detail with reference to the foregoing embodiments, a person of ordinary skill in the art should understand that it is still possible to make modifications to the technical solutions documented in the foregoing embodiments, or to make equivalent substitutions for some or all of the technical features therein; and these modifications or substitutions do not take the essence of the corresponding technical solutions out of the scope of the technical solutions of the embodiments of the present disclosure.

## Claims

1. A slitting cutter group, **characterized by** comprising:
a first cutter assembly (100) comprising a first rotating shaft (1), two first cutters (3), a first spacer bushing (5), and an elastic member (6), wherein the two first cutters (3) are sleeved over the first rotating shaft (1) at an interval, the first spacer bushing (5) is sleeved over the first rotating shaft (1) and located between the two first cutters (3), and the elastic member (6) is disposed on the periphery of the first rotating shaft (1), is located between the two first cutters (3), and abuts against the two first cutters (3); and
a second cutter assembly (200) comprising a second rotating shaft (2) and two second cutters (4), wherein the second rotating shaft (2) is parallel to the first rotating shaft (1), and the two second cutters (4) are fixedly sleeved over the second rotating shaft (2) at an interval, and are respectively provided in one-to-one correspondence with the first cutters (3) in an axial direction of the second rotating shaft (2), so that the two second cutters (4) are capable of respectively cooperating with the two first cutters (3) for slitting.

2. The slitting cutter group of claim 1, **characterized in that** the elastic member (6) is an elastic ring, which is sleeved over the periphery of the first rotating shaft (1).

3. The slitting cutter group of claim 2, **characterized in that** there is provided one elastic ring which is sleeved over the first spacer bushing (5).

4. The slitting cutter group of claim 2, **characterized in that** there are provided two elastic rings which are sleeved over the first rotating shaft (1), and one of the elastic rings is abutted between the first spacer bushing (5) and each of the two first cutters (3).

5. The slitting cutter group of claim 4, **characterized in that** the first spacer bushing (5) comprises a large diameter section (51) and two small diameter sections (52), the two small diameter sections (52) are located on both sides of the large diameter section (51) along an axial direction of the first rotating shaft (1), the two elastic rings are respectively sleeved over the two small diameter sections (52), and one of the elastic rings is abutted between the large diameter section (51) and each of the two first cutters (3).

6. The slitting cutter group of any one of claims 1 to 5, **characterized in that** projections of the two first cutters (3) onto the second rotating shaft (2) are located between the two second cutters (4), and the elastic member (6) is configured for applying a force to a respective first cutter (3) in a direction away from the first spacer bushing (5) along the axial direction of the first rotating shaft (1), so that each of the first cutters (3) is pressed against a respective second cutter (4).

7. The slitting cutter group of any one of claims 1 to 5, **characterized in that** the second cutter assembly (200) further comprises:
a second spacer bushing (8) sleeved over the second rotating shaft (2) and located between the two second cutters (4);
second end bushings (9) sleeved over the second rotating shaft (2) and located respectively on two sides of the two second cutters (4) opposite to the second spacer bushing (8), wherein the second end bushings (9) and the second spacer bushing (8) are configured for together clamping and fixing the second cutters (4).

8. The slitting cutter group of claim 7, **characterized in that** projections of the two first cutters (3) onto the second rotating shaft (2) are located between the two second cutters (4), and an outer diameter of the second cutter (4) is equal to that of the second end bushings (9) and greater than that of the second spacer bushing (8).

9. The slitting cutter group of claim 8, **characterized in that** the second cutter (4) is a flat cutter.

10. The slitting cutter group of any one of claims 1 to 5, **characterized in that** the first cutter assembly (100) further comprises:
first end bushings (10) sleeved over the first rotating shaft (1) and located respectively on two sides of the two first cutters (3) opposite to the first spacer bushing (5), wherein outer diameters of the first end bushings (10) and the first spacer bushing (5) are the same and are less than that of the first cutters (3).

11. The slitting cutter group of any one of claims 1 to 5, **characterized in that** the first cutters (3) are tapered cutters, each of which is provided with a beveled section (31) sloping inwardly from the radial outermost part of the first cutter (3) toward a radial inner part of the first cutter (3) along the axial direction of the first rotating shaft (1).

12. A pole piece slitting device, **characterized by** comprising:
a mounting frame; and
a slitting cutter group (1000) of any one of claims 1 to 11 mounted on the mounting frame.
